# EUROPÄISCHE PATENTSCHRIFT

(11) **EP 2 782 735 B1**
(45) Veröffentlichungstag und Bekanntmachung des Hinweises auf die Patenterteilung: **01.02.2017**
(21) Anmeldenummer: 12786991.5
(22) Anmeldetag: 15.11.2012
(51) Int. Cl.: B29C 44/42, B29C 44/34, C08J 9/12

(54) **VERFAHREN ZUR KONTINUIERLICHEN HERSTELLUNG VON NANOPORÖSEN POLYMERSCHAUMSTOFFEN**
METHOD FOR CONTINUOUS PRODUCTION OF NANOPOROUS POLYMER FOAMS
PROCÉDÉ DESTINÉ À LA FABRICATION CONTINUE DE MOUSSES POLYMÈRES NANOPOREUSES

(30) Priorität: 21.11.2011 EP 11189967
(43) Veröffentlichungstag der Anmeldung: 01.10.2014
(73) Patentinhaber: BASF SE, 67056 Ludwigshafen am Rhein (DE)
(72) Erfinder: SOMMER, Maria-Kristin, 67157 Wachenheim (DE); GEHR, Alexander, 68161 Mannheim (DE); HINGMAN, Roland, 68526 Ladenburg (DE); HAHN, Klaus, 67281 Kirchheim (DE); MERKEL, Peter, 67308 Zellertal (DE); SCHÄFFNER, Peter, 68309 Mannheim (DE); SCHALL, Herbert, 67354 Römerberg (DE); KHAZOVA, Elena, 68169 Mannheim (DE)
(74) Vertreter: BASF IP Association
(86) Internationale Anmeldenummer: PCT/EP2012/072659
(87) Internationale Veröffentlichungsnummer: WO 2013/075994

(56) Entgegenhaltungen:
- US-B2- 7 842 379

## Beschreibung

Die vorliegende Erfindung betrifft Verfahren zur kontinuierlichen Herstellung von nanoporösen Polymerschaumstoffen durch Druckentspannung.

Es ist allgemein bekannt, dass geschäumte Kunststoffe, durch Extrusion von flüchtigen Treibmitteln enthaltenden Schmelzen hergestellt werden können.

So beschreiben M. Lee et al. In "Polymer Engineering and Science, Vol. 38, No. 7, 1998, die Extrusion von geschäumten Polyethylen/Polystyrol-Blends mit superkritischem Kohlendioxid.

Insbesondere im Bereich Wärmedämmung werden Schaumstoffe als Isoliermaterial eingesetzt. Da die mittlere freie Wegstrecke von Luft ungefähr 60 bis 100 Nanometer beträgt (abhängig von Druck und Temperatur), kann daraus geschlossen werden, dass in einem Polymerschaumstoff mit Luft als Zellgas bei einer mittleren Zellgröße von kleiner oder gleich 60 bis 100 Nanometer der Beitrag des Zellgases zur Gesamtwärmeleitung des Schaumstoffs bedeutend reduziert oder sogar völlig eliminiert wird. Daher wären Schaumstoffe mit möglichst kleinzelliger Struktur besonders wünschenswert.

Allerdings gilt es zu beachten, dass nicht nur das Erreichen einer derartigen kleinen Zelldimension wichtig ist, sondern dass auch die Schaumdichte möglichst weit reduziert werden muss, um nicht den über das Zellgas gewonnenen Vorteil durch einen erhöhten Beitrag der polymeren Matrix zur Gesamtwärmeleitung zu verlieren. Dies bedeutet, dass ein nanoporöser Schaumstoff auch eine möglichst geringe Dichte aufweisen muss um eine gegenüber Standard-Polymerschaumstoffen verbesserte thermische Isolierwirkung aufzuweisen.

Hinzu kommt das Problem, dass zwar unmittelbar nach der Schäumung häufig sehr kleine Zellgrößen vorliegen können, dann aber eine Reifung mit der Bildung größerer Zellen eintritt.

In US 5,955,511 und in EP-A 1 424 124 werden beispielhaft Verfahren zur Herstellung mikro- und nanoporöser Polymerschaumstoffe beschrieben, bei denen ein Polymer in einem ersten Schritt bei niedrigen Temperaturen unterhalb der Glasübergangstemperatur des Polymers mit einem Treibmittel unter Druck beladen wird. Dieses beladene Polymer wird anschließend nach Druckentspannung ohne Aufschäumen durch Temperaturerhöhung in einem separaten Schritt geschäumt.

In der WO2008/087559 werden kontinuierliche Extrusionsverfahren zur Herstellung nanoporöser Polymerschaumstoffe beschrieben, bei dem ein Polymer zwar bei unterschiedlichen Temperaturen unter Druck mit dem Treibmittel beaufschlagt wird, der anschließende Schäumprozess durch Druckentspannung aber bei sehr tiefen Temperaturen weit unterhalb der Glasübergangs-temperatur des reinen Polymers aber oberhalb der Glasübergangstemperatur des gasbeladenen Systems durchgeführt wird.

In der US2009/0130420 wird ein kontinuierliches Extrusionsverfahren zur Herstellung nanoporöser Polymerschaumstoffe beschrieben, bei dem eine Polymerschmelze unter Druck mit Treibmittel beladen wird und durch anschließende Druckentspannung ebenfalls im Bereich der Glasübergangstemperatur der gasbeladenen Schmelze geschäumt wird. Zwar werden hier hohe Prozessdrücke bis zu 1000 MPa für die Beladung angegeben, allerdings führt die angegebene Druckentspannungsrate von 10 bis 1000 MPa/s in Verbindung mit den tiefen Temperaturen wiederum zu einer vergleichsweise hohen Schaumstoffdichte.

Allerdings weisen die geschilderten Prozesse nicht nur verfahrenstechnische Nachteile auf, auch die Produkteigenschaften zeigen weiteren Bedarf zur Optimierung.

Häufig sind die entstehenden Systeme mikroporös oder makroporös. Dabei bedeutet "mikroporös", dass die Porengrößen im Bereich von 1 bis 1000 Mikrometer liegen. Der Begriff "makroporös" bezeichnet Dimensionen größer als 1000 Mikrometer.

Die WO 2011/066060 beschreibt ein Verfahren zur Herstellung von thermoplastischen Schaumstoffen mit einer mittleren Zellgröße von 300 nm oder darunter und einem Porenanteil von mehr als 50 % durch rasche Druckentspannung einer schäumbaren Polymerzusammensetzung, welche CO₂, Stickstoff oder Argon als Treibmittel und amorphe oder kristalline Nanopartikel als Nukleierungsmittel enthalten.

Gemäß der WO 2011/112352 kann auf die Nanopartikel verzichtet werden, wenn spezielle Polymethacrylatcopolymere zusammen mit 50 bis 100 Mol.-% CO₂ als Treibmittel eingesetzt werden.

Es ist daher die Aufgabe der vorliegenden Erfindung ein Verfahren zur kontinuierlichen Herstellung von nanoporösen Polymerschaumstoffen bereitzustellen, welches bei hohem Druck und Treibmittelbeladung auch bei hohem Durchsatz stabil durchführbar ist.

Demgemäß wurde ein Verfahren zur kontinuierlichen Herstellung von nanoporösen Polymerschaumstoffen gefunden, umfassend die Stufen
a) Bilden einer Polymerschmelze aus thermoplastischem Polymer und Druckaufbau in einem Einschneckenextruder mit genutetem Zylinder oder in einem Zweischneckenextruder mit mit nachgeschalteter Zahnradpumpe auf einen Druck im Bereich von 20 bis 200 MPa
b) Beladen der Polymerschmelze mit einem Treibmittel in einer demDruckaufbau anschließenden Zone mit Mischelementen unter einem Druck und bei einer Temperatur, bei dem sich das Treibmittel im überkritischen Zustand befindet,
c) Temperieren der beladenen Polymerschmelze über Kühlelemente auf eine Temperatur, welche im Bereich von 40 °C unter bis 40°C über der mittels DSC nach DIN-ISO 11357-2 bei einer Aufheizrate von 20 K/min ermittelbaren Glasübergangstemperatur der unbeladenen Polymerschmelze liegt,
d) Druckentspannung der in Stufe b) beladenen und in Stufe c) temperierten Polymerschmelze über eine Düse oder Lochplatte mit einer Druckentspannungsrate im Bereich von 15.000 bis 2.000.000 MPa/sec.

Die erfindungsgemäße Entkopplung des Druckaufbaus in Stufe a) von der Treibmitteleinarbeitung in Stufe b) führt zu einer Stabilisierung des kontinuierlichen Verfahrens.

Zum Druckaufbau in der ersten Stufe (Stufe a) wird ein Einschneckenextruder mit genutetem Zylinder oder ein Zweischneckenextruder mit nachgeschalteter Zahnradpumpe eingesetzt.

Als Druckaufbauaggregat wird bevorzugt ein genuteter Einschneckenextruder, beispspielsweise ein Helibar® - Extruder, wie in E. Grünschloß, 18. Stuttgarter Kunststoffkolloquium 2003 beschrieben, eingesetzt. Dieser kann in der genuteten Einzugszone einen Druck von 750 bar pulsationsfrei aufbauen und diesen Drucklevel konstant halten und ist daher besonders bevorzugt für das erfindungsgemäße Verfahren geeignet.

Mit Hilfe des erfindungsgemäßen Verfahrens werden nanoporöse Polymerschaumstoffe mit einer mittleren Zellzahl im Bereich von 1.000 bis 100.000 Zellen/mm, bevorzugt von 2.000 bis 50.000 und besonders bevorzugt von 5.000 bis 50.000 Zellen/mm, und einer Schaumdichte im Bereich von 10 bis 500 kg/m³, bevorzugt im Bereich von 10 bis 300 kg/m³, besonders bevorzugt im Bereich von 10 bis 250 kg/m³, hergestellt.

Erfindungsgemäß umfasst der Begriff "nanoporös" Porengrößen im Bereich von 5 bis 1000 Nanometern.

Erfindungsgemäß beschreibt der Begriff "mittlere Zellgröße" den mittleren Durchmesser von kreisrunden Schaumzellen mit zu den realen Zellen äquivalenten Querschnittsflächen in typischen Häufigkeits/Größenkurven, wie sie aus Auswertung von mindestens 10 realen Zellflächen von repräsentativen elektronenmikroskopischen Aufnahmen bestimmt werden können.

Erfindungsgemäß beschreibt der Begriff "Schaumdichte" oder auch "Dichte" das Masse zu Volumenverhältnis der geschäumten nanoporösen Formmasse, welche nach der Auftriebsmethode bestimmt werden kann oder sich rechnerisch aus dem Quotient Masse zu Volumen eines Formteils ergibt.

Erfindungsgemäß umfasst der Begriff "Formmasse" oder auch "Polymerschmelze" sowohl reine Homo- als auch Copolymere sowie Mischungen von Polymeren. Des Weiteren beinhaltet der Begriff auch Formulierungen, die auf Polymeren und den unterschiedlichsten Additiven beruhen. Beispielhaft sei hier nur auf Prozessadditive wie zum Beispiel Stabilisatoren, Fließhilfsmittel, Farbadditive, Antioxidantien und ähnliche, dem Fachmann bekannte Additive verwiesen.

Die Schäume können geschlossenzellig sein, sind aber vorzugsweise offenzellig. "Geschlossenzellig" bedeutet, dass eine diskontinuierliche Gasphase und eine kontinuierliche Polymerphase vorliegen.

"Offenzellig" bedeutet, dass es sich um ein bi-kontinuierliches System handelt, in dem die Gasphase und die Polymerphase jeweils kontinuierliche Phasen darstellen, wobei die beiden Phasen interpenetrierende Phasen darstellen.

Die nanoporösen Systeme weisen eine Offenzelligkeit (nach DIN-ISO 4590) von mehr als 40 %, bevorzugt mehr als 50 %, besonders bevorzugt mehr als 75 % auf. Im Idealfall sind mindestens 90 % wenn nicht gar praktisch alle Zellen geöffnet, d.h. das Schaumgerüst besteht nur aus Stegen.

In der zweiten Stufe (Stufe b) wird eine polymere Formmasse (Polymerschmelze) mit einem Gas oder einem Fluid als Treibmittel unter einem Druck und einer Temperatur, bei denen sich das Treibmittel im überkritischen Zustand befindet, beladen.

Als thermoplastische Polymere für die Polymerschmelze können beispielsweise Styrolpolymere, Polyamide (PA), Polyolefine, wie Polypropylen (PP), Polyethylen (PE) oder Polyethylen-Propylen-copolymere, Polyacrylate, wie Polymethylmethacrylat (PMMA), Polycarbonat (PC), Polyester, wie Polyethylenterephthalat (PET) oder Polybutylenterephthalat (PBT), Polysulfone, Polyethersulfone (PES), Polyetherketone, Polyetherimide oder Polyethersulfide (PES), Polyphenylenether (PPE) oder Mischungen davon eingesetzt werden. Besonders bevorzugt werden Styrolpolymere, wie Polystyrol oder Styrol-Acrylnitril-Copolymere oder Polyacrylate wie Polymethylmethacrylat eingesetzt.

Als Polymere eigenen sich insbesondre thermoplastisch verarbeitbare amorphe Polymere, in denen nicht mehr als 3 % kristalline Anteile vorliegen (bestimmt durch DSC).

Als Treibmittel eignen sich feste, gasförmige oder flüssige Treibmittel wie Kohlendioxid, Stickstoff, Luft, Edelgase wie beispielsweise Helium oder Argon, aliphatische Kohlenwasserstoffe wie Propan, Butan, teilweise oder vollständig halogenierte aliphatische Kohlenwasserstoffe, wie Fluorkohlenwasserstoffe, Chlorfluorkohlenwasserstoffe, Difluorethan, aliphatische Alkohole oder Distickstoffoxid (Lachgas), wobei Kohlendioxid, Lachgas und/oder Stickstoff bevorzugt werden. Ganz besonders bevorzugt ist Kohlendioxid.

Erfindungsgemäß bedeutet dies, dass das Treibmittel direkt überkritisch dosiert und/oder eingespritzt werden kann, oder die Prozessparameter des zu injizierenden Polymers zum Zeitpunkt der Injektion in einem Bereich liegen, so dass das Treibmittel unter diesen Bedingungen überkritisch wird. Für CO₂ beispielhaft liegt der kritische Punkt bei ungefähr 31 °C und 7,375 MPa, für N₂O beispielhaft liegt der kritische Punkt bei ungefähr 36,4°C und 7,245 MPa.

Die Treibmittelbeladung der polymeren Formmasse oder Schmelze kann in einem Extruder oder statischen Mischer erfolgen.

Erfindungsgemäß wird für die Beladung ein Druck oberhalb des kritischen Drucks des Treibmittels eingestellt, bevorzugt größer als 10 MPa, besonders bevorzugt größer als 20 MPa. Dieser Beladungsdruck ist für die Generierung einer möglichst hohen Gaskonzentration in der polymeren Formmasse wichtig, und kann im Rahmen der technischen Möglichkeiten heutiger Druckbehälter bis auf 200 MPa eingestellt werden. Besonders bevorzugt erfolgt die Beladung bei einem Druck im Bereich von 50 - 80 MPa, insbesondere im Bereich von 65 bis 75 MPa, um eine möglichst vollständige Lösung des Treibmittels in der Polymerschmelze zu erreichen.

Erfindungsgemäß erfolgt die Beladung in einem oder mehreren Mischelementen. Bei einer vorteilhaft ausgestalteten Variante ist die Temperatur der polymeren Formmasse im Bereich der Treibmittelinjektion oberhalb der Glasübergangstemperatur der Formmasse, so dass sich das Treibmittel sehr gut und schnell in der Schmelze verteilen und lösen kann. Als vorteilhaft hat es sich erwiesen, über die Temperatur eine Nullviskosität der polymeren Formmasse kleiner als 1x10⁵ Pas vor der ersten Dosierstelle für das Treibmittel einzustellen. Die Nullviskosität kann über eine oszillierende Messung mit einem Rotationsrheometer im Platte-Platte Aufbau ermittelt werden.

Der Injektionsdruck wird hierbei generell höher eingestellt als der Schmelzedruck in diesem Bereich. In einer besonders vorteilhaften Ausführung wird der Injektionsdruck über ein Druckhalteventil auf einen konstanten hohen Wert eingestellt. Hierbei wird erfindungsgemäß ein Treibmittelmassestrom eingestellt, welcher bezogen auf den Massestrom der polymeren Formmasse 10 bis 95 Gew.-%, insbesondere 20 bis 70 Gew.-% betragen kann. Die Obergrenze für die Treibmittelbeladung stellt hierbei die bei den Parametern Druck und Temperatur der beladenen Schmelze vor der Düse erreichbare Sättigungskonzentration dar, welche entweder empirisch im Prozess oder mittels gravimetrischer Methoden ermittelt werden kann.

Besonders bevorzugt wird die Polymerschmelze mit 45 bis 95 Gew.-% Treibmittel, bezogen auf beladene Polymerschmelze, beladen.

Die Beladung der Polymerschmelze erfolgt bevorzugt kontinuierlich über mindestens zwei Dosierstellen, welche an unterschiedlichen Stellen der in Stufen b) und c) verwendeten Misch- oder Kühlelemente angebracht sind. Durch die kaskadenförmige Dosierung des Treibmittels wird die Mischwirkung verbessert und die Länge der Misch- und Kühlstrecke kann verkürzt werden.

In einer dritten Stufe (Stufe c) der erfindungsgemäßen Verfahren wird nun die beladene polymere Formmasse unter Aufrechterhaltung des Beladungsdrucks größer 10 MPa, bevorzugt größer 20 MPa, auf eine Temperatur abgekühlt, welche zwischen -40 und +40°C, bevorzugt zwischen -20 und +35°C, besonders bevorzugt zwischen 0 und 30°C um die mittels DSC nach DIN-ISO 11357-2 bei einer Aufheizrate von 20 K/min ermittelbare Glasübergangstemperatur der unbeladenen polymeren Formmasse liegt.

Diese Anpassung der Temperatur der polymeren Formmasse erfolgt nach dem Aufbringen des Beladungsdrucks, um eine hinreichende Fließfähigkeit der polymeren Formmasse in der gesamten Prozessstrecke sicherzustellen und somit ein Einfrieren der polymeren Formmasse zu verhindern. Bei der Prozessführung ist auf eine ausreichende Zeit zur Homogenisierung der Temperatur zu achten, insbesondere nach Injektion des kalten Treibmittels in die Kavität. Des Weiteren muss auf eine ausreichende Zeit zum Erreichen der Sättigungskonzentration über Diffusion geachtet werden, insbesondere bei größeren Volumina der polymeren Formmasse.

Die beladene Formmasse wird in Stufe c) kontinuierlich abgekühlt. Hierbei können alle dem Fachmann bekannten Apparate von einem Kühlextruder bis hin zu Mischern und Kühlern, beispielsweise Rohrbündelwärmetauschern, in beliebiger Anzahl und Kombination eingesetzt werden. Um den Druck in der beladenen Formmasse aufrecht zu erhalten, kann der Einsatz von Schmelzepumpen zur Druckerhöhung angebracht sein, welche ebenfalls in beliebiger Anzahl und Position in den Prozess eingebracht werden können. Bevorzugt werden jedoch nach der Einmischung des Treibmittels keine Schmelzepumpen eingesetzt, da die Überlagerung von Druckaufbau und Treibmittelbeladung zu Verfahrensinstabilitäten und Druckschwankungen führen können. Bedingung ist jedoch, dass durch eine ausreichende Verweilzeit und Durchmischung eine homogene Verteilung der Treibmittelmoleküle erfolgt und das Treibmittel vollständig in der polymeren Formmasse gelöst werden kann.

Überraschenderweise haben experimentelle Arbeiten der Erfinder gezeigt, dass, entgegen allgemeiner Fachmeinungen, eine rapide Druckentspannung einer erfindungsgemäß beladenen und temperierten polymeren Formmasse in der vierten Stufe d) zu stabilen nanoporösen Polymerschaumstoffen mit geringer Dichte führt.

Die Summe der Verhältnisse Länge zu Durchmesser (L/D-Verhältnis) aller der in Stufen b) und c) verwendeten Misch- und Kühlelemente beträgt vorzugsweise 20 bis 100. Die Beladung der Polymerschmelze erfolgt vorzugsweise in der Stufe c). Die erste Dosierstelle wird bevorzugt an den Beginn des ersten Mischers der Stufe gelegt, eine zweite Dosierstelle nach einer Länge von 5 bis 20 Durchmessern (D) von der ersten Dosierstelle.

In einer vierten Stufe (Stufe d) erfolgt eine Druckentspannung der in Stufe b) mit Treibmittel beladenen und in Stufe c) temperierten Polymerschmelze mit einer Druckentspannungsrate im Bereich von 15.000 bis 2.000.000 MPa/sec. Die Druckentspannungsrate bezieht sich auf den Drucksprung, der innerhalb eines Zeitraums von einer Sekunde vor dem Aufschäumen stattfindet. Dabei beträgt der Druckabfall mindestens 10 MPa.

Der Druck vor der Entspannung kann über einen Drucksensor bestimmt werden. Üblicherweise wird auf Atmosphärendruck entspannt. Es kann aber auch ein leichter Überdruck oder Unterdruck angelegt werden. In der Regel erfolgt der Druckabfall sprunghaft innerhalb von 0,1 bis 10 ms. Die Druckentspannungsrate kann beispielsweise durch Anlegen einer Tangente im Bereich des stärksten Druckabfalls im Druck-Temperatur-Diagramm ermittelt werden.

Die Druckentspannungsrate wird üblicherweise über die Form der Düse bzw. Düsen einer Lochplatte eingestellt. In der Regel werden hierzu Düsen mit mindestens einem Düsenabschnitt, welcher vorzugsweise eine Länge von 1 bis 5 mm und einen Querschnitt von 0,1 - 25 mm² aufweist, verwendet.

Durch Einstellen einer Druckentspannungsrate im Bereich von 15.000 bis 2.000.000 MPa/s, bevorzugt im Bereich von 30.000 bis 1.000.000 MPa/s, besonders bevorzugt im Bereich von 40.000 bis 500.000 MPa/s kann eine polymere Formmasse mit sehr hoher Treibmittelkonzentration und dementsprechend geringer Viskosität auch bei homogenen Schäumtemperaturen oberhalb der Glasübergangstemperatur der nicht-beladenen Formmasse zu einer nanoporösen Schaummorphologie mit gleichzeitig deutlich geringerer Schaumdichte hergestellt werden. Es hat sich gezeigt, dass in einigen Fällen Druckentspannungsraten bis 200.000 MPa/s ausreichend sein können. In diesen Fällen kann das Verfahren vereinfacht ausgeführt werden.

In der vierten Stufe (Stufe d) wird die Druckentspannungsrate durch die Förderleistung des Extruders sowie die Düsengeometrie gewährleistet.

Je nach verwendeter Düsengeometrie können Schaumstrukturen und letztlich Polymerschaumstoffe in verschiedener Gestalt hergestellt werden. In bevorzugten Ausführungen des erfindungsgemäßen Verfahrens werden Vollprofile, beispielsweise Rundstränge oder auch Hohlprofile hergestellt.

Die Ausbildung nanozellulärer Strukturen basiert auf der Erzeugung extrem hoher Nukleierungsraten, insbesondere durch die Beladung der Polymerschmelze mit bis zu 50% physikalischem Treibmittel bei Drücken oberhalb von 300 bar und Druckabfallraten >200 GPa/s an der Austrittsdüse.

Das erfindungsgemäße Verfahren ist materialschonend, pulsationsfrei und ermöglicht durch den hohen Druckaufbau hohe Treibmittelbeladungen und eine hohen Durchsatz, beispielsweise bis zu 50 - 80 kg Polymer pro Stunde und 30 - 80 kg Treibmittel pro Stunde.

In einer ebenfalls bevorzugten Ausgestaltung des erfindungsgemäßen Verfahrens wird der Polymerschaumstoff in einem weiteren Verfahrensschritt (optionale Stufe e) zu Formkörpern in Gestalt von geschäumten Polymerpartikeln, -granulaten, oder -pulvern zerkleinert, z.B. mittels einer Trennscheibe, eines Granulators, einer Klinge, eines Schlagmessers oder einer Mühle. Der Zerkleinerungsschritt kann dabei bevorzugt im direkten Anschluss an die Druckentspannung angeschlossen sein, kann aber auch getrennt zu einem späteren Zeitpunkt durchgeführt werden. Hierbei kann es vorteilhaft sein, den Polymerschaumstoff abzukühlen, beispielsweise mittels Eiswasser, Trockeneis oder flüssigem Stickstoff.

Die Zerkleinerung in Stufe e) kann ein- oder mehrstufig, in letztgenanntem Fall in einer oder in mehreren unterschiedlichen Vorrichtungen erfolgen. Beispielsweise kann der nanoporöse Polymerschaumstoff zunächst einer Vorzerkleinerung und anschließend einer Nachzerkleinerung unterzogen werden. Eine Nachzerkleinerung kann vorteilhafterweise in einer Schneidmühle oder einer Fließbettgegenstrahlmühle erfolgen. Bevorzugt weisen die Schaumstoffpartikeln nach dem Zerkleinern einen mittleren Partikeldurchmesser im Bereich von 10 µm bis 10 mm, besonders bevorzugt im Bereich von 0,1 bis 5 mm auf.

Als Vorrichtung zum Zerkleinern kommen insbesondere Schneckenzerkleinerer, Rotorscheren, Ein- und Mehrwellenzerkleinerer, Walzenmühlen, Feinmühlen, Feinmahlanlagen, Prallscheibenmühlen, Hammermühlen und Fließbettgegenstrahhlmühlen in Betracht.

Verfahren und Vorrichtungen zur Zerkleinerung von organischen Materialien sind dem Fachmann weitläufig bekannt. Der Fachmann wählt eine geeignete Vorrichtung in Abhängigkeit von der zu zerkleinernden Menge, dem erwünschten Durchsatz, der zu erzielenden Partikelgröße und der Sprödigkeit des eingesetzten Materials

Auch die so hergestellten pulver- oder granulatförmigen nanoporösen Polymerschaumstoffe oder Materialien enthaltend die pulver- oder granulatförmigen nanoporösen Polymerschaumstoffe können bevorzugt als Wärmedämmstoffe eingesetzt werden.

Pulverschüttungen für Dämmanwendungen wie z. B. Einblasdämmung sind dem Fachmann bereits bekannt. Organische Materialien in Form von Schäumen konnten jedoch bislang nicht zu Pulver und/oder Schüttungen verarbeitet werden, ohne die günstigen Wärmedämmeigenschaften des zugrundeliegenden porösen Materials negativ zu beeinflussen. Bei den bekannten organischen porösen Materialien erfolgt nach Zerkleinerung eine völlige Zerstörung der Porenstruktur.

Auch bei bekannten anorganischen porösen Materialien lässt sich die Korngröße nicht in ausreichendem Maße frei wählen, was die Anwendbarkeit einschränkt. Beispielsweise fallen pyrogene Kieselsäuren als poröse Materialien in der Regel als Feinstaub an, so dass für viele Anwendungen eine Verpressung und/oder Verklebung erforderlich ist.

Bei der späteren Anwendung sind die auch die Rieselfähigkeit und die niedrige Dichte des nanoporösen Polymerschaumstoffs sowohl in der Schüttung als auch im kompaktierten Zustand ein großer Vorteil. Ein weiterer Vorteil der Schüttungen sind die kontrolliert einstellbaren Partikeldurchmesser sowie deren Größenverteilung durch Wahl des Zerkleinerungsverfahrens.

Die pulver- oder granulatförmigen nanoporösen Polymerschaumstoffe können als solche oder in Mischung mit weiteren funktionalen Komponenten als Wärmedämmstoffe eingesetzt werden. Ein Wärmedämmstoff ist demzufolge eine Abmischung enthaltend die pulver- oder granulatförmigen nanoporösen Polymerschaumstoffe. Die Auswahl geeigneter funktionaler Komponenten als Zusatzstoffe hängt vom Anwendungsgebiet ab.

Es werden außerdem Baumaterialien und Vakuumisolationspaneele enthaltend die pulver- oder granulatförmigen nanoporösen Polymerschaumstoffe sowie die Verwendung der pulver- oder granulatförmigen nanoporösen Polymerschaumstoffe zur Wärmedämmung beschrieben. Vorzugsweise werden die erhältlichen Materialien für die Wärmedämmung insbesondere in Bauten, oder zur Kälteisolation insbesondere im mobilen, logistischen oder im stationären Bereich verwendet, zum Beispiel in Kühlgeräten oder für mobile Anwendungen.

Mögliche weitere Komponenten dieser Wärmedämmstoffe sind beispielsweise Verbindungen, die Wärmestrahlen im Infrarotbereich, insbesondere im Wellenlängenbereich zwischen 3 und 10 µm absorbieren, streuen und/oder reflektieren können. Sie werden allgemein als Infrarot-Trübungsmittel bezeichnet. Die Partikelgröße dieser Teilchen beträgt vorzugsweise von 0,5 bis 15 Mikrometer. Beispiele für derartige Substanzen sind insbesondere Titanoxide, Zirkonoxide, llmenite, Eisentitanate, Eisenoxide, Zirkonsilikate, Siliciumcarbid, Manganoxide, Graphite und Russ.

Zur mechanischen Verstärkung können Fasern als Zusatzstoffe eingesetzt werden. Diese Fasern können anorganischen oder organischen Ursprungs sein. Beispiele für anorganische Fasern sind vorzugsweise Glaswolle, Steinwolle, Basalt-Fasern, Schlacken-Wolle, keramische Fasern, die aus Schmelzen von Aluminium und/oder Siliciumdioxid sowie weiteren anorganischen Metalloxiden bestehen, und reine Siliciumdioxidfasern wie z. B. Silica-Fasern. Organische Fasern sind vorzugsweise z. B. Cellulosefasern, Textilfasern oder Kunststofffasern. Zum Einsatz kommen folgende Dimensionen: Durchmesser vorzugsweise 1-12 Mikrometer, insbesondere 6-9 Mikrometer; Länge vorzugsweise 1-25 mm, insbesondere 3-10 mm.

Aus technischen und wirtschaftlichen Gründen können der Mischung anorganische Füllmaterialien zugesetzt werden. Zum Einsatz kommen vorzugsweise verschiedene, synthetisch hergestellte Modifikationen von Siliciumdioxid wie z. B. gefällte Kieselsäuren, Lichtbogenkieselsäuren, SiO2-haltige Flugstäube, die durch Oxidationen von flüchtigem Siliciummonoxid, bei der elektrochemischen Herstellung von Silicium oder Ferrosilicium entstehen. Ebenso Kieselsäuren, die durch Auslaugen von Silikaten wie Calziumsilikat, Magnesiumsilikat und Mischsilikaten wie z. B. Olivin (Magnesium-Eisensilikat) mit Säuren hergestellt werden. Ferner kommen zum Einsatz natürlich vorkommende SiO2-haltige Verbindungen wie Diatomeenerden und Kieselguren. Ebenfalls können zur Anwendung kommen: thermisch aufgeblähte Mineralien wie vorzugsweise Perlite und Vermiculite. Je nach Bedarf können vorzugsweise feinteilige Metalloxide wie vorzugsweise Aluminiumoxid, Titandioxid, Eisenoxid zugesetzt werden.

Die Abmischung der Wärmedämmstoffe kann generell in diversen Mischaggregaten stattfinden. Bevorzugt kommen jedoch Planetenmischer zur Anwendung. Hierbei ist es vorteilhaft, die Fasern zuerst mit einem Teil der zweiten Mischkomponenten als eine Art Masterbatch vorzumischen, um damit ein vollständiges Aufschließen der Fasern zu gewährleisten. Nach dem Faseraufschluss erfolgt die Zugabe des größten Teils der Mischkomponenten.

Nach Beendigung des Mischprozesses kann das Schüttgewicht der Mischung je nach Art und Menge der Komponenten zwischen vorzugsweise 40-180 kg/m³, bevorzugt 40-120 kg/m³, betragen. Die Rieselfähigkeit der resultierenden porösen Mischung ist sehr gut, so dass sie problemlos und homogen zu Platten verpresst u. a. auch z. B. in die Hohlräume von Hohlbausteinen eingefüllt und verpresst werden kann. Beim Verpressen zu Platten kann durch Festlegung auf bestimmte Plattenstärken, über das Gewicht, die Dichte und infolge dessen auch die Wärmeleitzahl des Dämmstoffes wesentlich beeinflusst werden.

Die in Wärmedämmstoffen verwendeten Materialien kommen vorzugsweise in folgenden Anwendungsgebieten zum Einsatz: als Dämmung in Hohlbausteinen, als Kerndämmung bei mehrschaligen Bausteinen, als Kerndämmung für Vakuumisolationsplatten (VIP), als Kerndämmung für Wärmedämmverbundsysteme (WDVS), als Dämmung bei zweischaligen Mauerwerken, insbesondere im Rahmen der Einblasdämmung.

Die pulver- oder granulatförmigen nanoporösen Polymerschaumstoffe eigenen sich insbesondere zur Herstellung von Vakuumisolationspaneelen. Darüber hinaus eignen sich die Wärmedämmstoffe und die pulver- oder granulatförmigen nanoporösen Polymerschaumstoffe insbesondere für die Dämmung von extrudierten Hohlprofilen, insbesondere als Kernmaterial für die Dämmung in Fensterrahmen.

Sehr gute Isolierwirkung zeigen insbesondere die sogenannten Vakuumisolationspaneele, kurz VIP genannt. Mit einer Wärmleitfähigkeit von etwa 0,004 bis 0,008 W/mK (je nach Kernmaterial und Unterdruck), weisen die Vakuumisolationspaneele eine 8 bis 25 mal bessere Wärmdämmwirkung wie konventionelle Wärmedämmsysteme aus. Sie ermöglichen daher schlanke Konstruktionen mit optimaler Wärmdämmung die sowohl im Baubereich als auch im Haushaltsgeräte-, Kühl- und Logistikbereich sowie im Automobil bzw. Fahrzeugbau eingesetzt werden können.

Vakuumisolationspaneele auf Basis poröser Wärmedämmstoffe, Polyurethanschaumplatten und gepressten Fasern als Kernmaterial mit Verbundfolien (z. B. Aluminiumverbundfolien bzw. sog. Metallisierten Folien) sind allgemein bekannt und hinlänglich beschrieben.

Ein weiterer Nachteil heutiger Vakuumisolationspaneele ist die fehlende Kombination aus geringer Wärmeleitfähigkeit bei moderaten Drücken und bei geringen Dichten der Kernmaterialien kleiner 200 kg/m³. Der Einsatz der nanoporösen Polymerschaumstoffe als Kem-Wärmedämmstoff in Vakuumisolationspanelen erlaubt das Einstellen einer optimalen Kombination aus Wärmeleitfähigkeit bei niedrigem Druck, Lebensdauer und geringer Dichte in Abhängigkeit der Parameter Zellgröße und Schaumdichte sowie der eingestellten Partikelgröße und Partikelgrößenverteilung. Als Kernmaterialien eingesetzt werden können die pulver- oder granulatförmigen nanoporösen Polymerschaumstoffe direkt als lose Schüttung oder als verpresste Formkörper.

### Beispiele

Einsatzstoffe:
- PMMA 6N:: PMMA Plexiglas 6N von Evonik Röhm GmbH mit einer Glasübergangstemperatur von ca. 102°C (gemessen mit DSC nach ISO 11357-2, Heizrate: 20K/min)
- PS 156F: Polystyrol Empera 156F der Fa. Ineos Styrencis International SA mit einer Glasübergangstemperatur von 102°C (gemessen mit DSC nach ISO 11357-2, Heizrate: 20K/min)

### Beispiel 1

Herstellung eines nanoporösen Polymerschaumstoffes mit niedriger Dichte in einem kontinuierlichen Extrusionsschaumverfahrens.

PS 156F wurde mit einem gleichläufigen Doppelschneckenextruder (Leistritz 18 mm) plastifiziert und homogenisiert. Durch den Doppelschneckenextruder und eine nachgeschaltete Schmelzepumpe wurde ein Prozessdruck von 40 MPa aufgebaut. Im Anschluss an die Plastifizierung der polymeren Formmasse wurde überkritisches CO₂ mit einem Einspritzdruck von ungefähr 47,5 MPa in die Formmasse bei einer Schmelzetemperatur von 190°C injiziert. Die Temperatur des injizierten Kohlendioxides betrug 20°C. Um den Einfluss einer kaskadierten Treibmitteldosierung zu ermitteln erfolgte in einer Versuchsreihe die Dosierung der gesamten CO2-Menge über eine Dosierstelle und in einer weiteren Versuchsreihe die Dosierung der CO2-Menge über zwei Dosierstellen. Die erste Dosierstelle befand sich am Beginn der Misch- und Kühlstrecke (L=0D), die zweite Dosierstelle folgt nach ca. 10D.

Die folgende Tabelle zeigt eine Übersicht der eingestellten Masseströme:

**Tabelle 1: Masseströme für unterschiedliche Einstellungen in Beispiel 1**

| Gesamtdurchsatz [g/h] | PS 156F [g/h] | CO₂ Pumpe 1 [%] | CO₂ Pumpe 1 [g/h] | CO₂ Pumpe 2 [%] | CO₂ Pumpe 2 [g/h] | CO₂ Gesamtmenge [%] |
|---|---|---|---|---|---|---|
| 2500 | 1940 | 28 | 543,2 | - | - | 28 |
| 2500 | 1940 | 15 | 291 | 13 | 252,2 | 28 |
| 2500 | 1880 | 17 | 319,6 | 15 | 282 | 32 |
| 2500 | 1825 | 19 | 346,75 | 17 | 310,25 | 36 |

Die Gesamtlänge der Misch- und Kühlstrecke betrug 50 D und bestand aus statischen Mischern sowie einem Wärmetauscher und war für einen Maximaldruck von 500 bar ausgelegt. Die beladene Formmasse wurde in der Misch- und Kühlstrecke von ca. 200°C auf 100°C abgekühlt. Der Prozessdruck wurde über 3 Schmelzepumpen, die entlang der Misch- und Kühlstrecke angeordnet waren, über einem Mindestwert von 350 bar gehalten.

Anschließend wurde die beladene Schmelze über eine Rundlochdüse mit 0,3 mm Durchmesser und 1,6 mm Länge mit einer Druckentspannungsrate von >80 MPa/s extrudiert. Es ergab sich ein Schaumstrang mit Porengrößen kleiner 500 nm und einer mittleren Dichte von 170 kg/m³. Es wurde beobachtet, dass bei Einsatz nur einer Dosierstelle für CO₂ maximal 28 Gew.-% CO_{2.}, bezogen auf die treibmittelhaltige Polymerschmelze, homogen eingemischt werden konnten. Das Treibmittel CO₂ wurde homogen und fein dispergiert in der Polymerschmelze und war am Ende der Misch- und Kühlstrecke möglichst vollständig im Polymer gelöst. Die Mischung war über Schmelzepumpen stabil förderbar. Eine inhomogene Mischung mit großen CO₂-Blasen kann über Schmelzepumpen nicht Durchsatz- oder Eingangsdruck-geregelt gefördert werden.

Bei einem höheren CO₂-Anteil traten Druckschwankungen von mehr als ± 50 bar entlang der Misch- und Kühlstrecke auf so dass eine geregelte Prozessführung nicht mehr möglich war.

Durch den Einsatz von 2 Dosierstellen konnten die oben beschriebenen Druckschwankungen verhindert werden sowie der CO₂-Anteil auf 36% erhöht werden. Durch den Einsatz einer kaskadierten Dosierung konnten also 8% mehr CO₂ homogen und fein dispers in die Polymerschmelze eingearbeitet werden.

### Beispiel 2

Mit einem Helibar® Extrusionssystem wurden Versuche zum Druckaufbauvermögen mit PS 156F und PMMA 6N durchgeführt.

Die Versuchsanlage bestand aus Wendelnutbuchse der Länge 6D mit 6 Wendelnuten der Steigung 105 mm, einem Plastifizierzylinder der Länge 28D mit 6 Wendelnuten der Dimension 5,5mm x 0,7mm, einem Drosselwerkzeug, welches eine stufenlose Einstellung des Werkzeugdruckes an der Schneckenspitze von 5-100 MPa ermöglicht, sowie einer Barriereschnecke mit einem Scher- und Mischteil. Der Durchmesser D der eingesetzten Schnecke betrug 35 mm. Die Einzugszone wurde mittels eines Kühligels gekühlt.

Für alle Versuchsmaterialien wurden die Massetemperatur an der Schneckenspitze (gemessen mit einem Temperatursensor), der spezifischer Durchsatz, der Druck- und Temperaturverlauf entlang des Zylinders sowie das Drehmoment als Funktion des Werkzeugdruckes und der Schneckendrehzahl analysiert. Folgende Einstellungen wurden untersucht:

**Tabelle 2: Versuchseinstellungen für Extrusionsversuche in Beispiel 2:**

| Schneckendrehzahl [1/min] | Werkzeugdruck | | | |
|---|---|---|---|---|
| | 30 MPa | 50 MPa | 70 MPa | 90 MPa |
| 100 | x | x | x | x |
| 150 | x | x | x | x |
| 200 | x | x | x | x |

Mit beiden Polymeren konnten Werkzeugdrücke bis zu 90 MPa problemlos aufgebaut werden. Der spezifische Durchsatz, welcher den mit der Schneckendrehzahl normierten Massedurchsatz beschreibt, also Durchsatz/Schneckendrehzahl, war bei allen Versuchseinstellungen gegendruckunabhängig.

Für PS156F ergab sich unabhängig von der eingestellten Schneckendrehzahl und dem einge- stellten Werkzeugdruck ein spezifischer Durchsatz von 0,44-0,45 kg*min/h. Für PMMA wurde ein spezifischer Durchsatz im Bereich 0,5-0,52 kg*min/h ermittelt.

Der Maximaldruck im Nutbuchsenextruder wurde bei allen untersuchten Einstellungen innerhalb einer Verfahrenslänge von ca. 10 D aufgebaut, wobei D den Durchmesser der Schnecke bezeichnet. In der nachfolgenden Verfahrensstrecke ist der Drucklevel bis zur Schneckenspitze konstant geblieben oder um maximal 10 MPa abgefallen.

### Beispiel 3

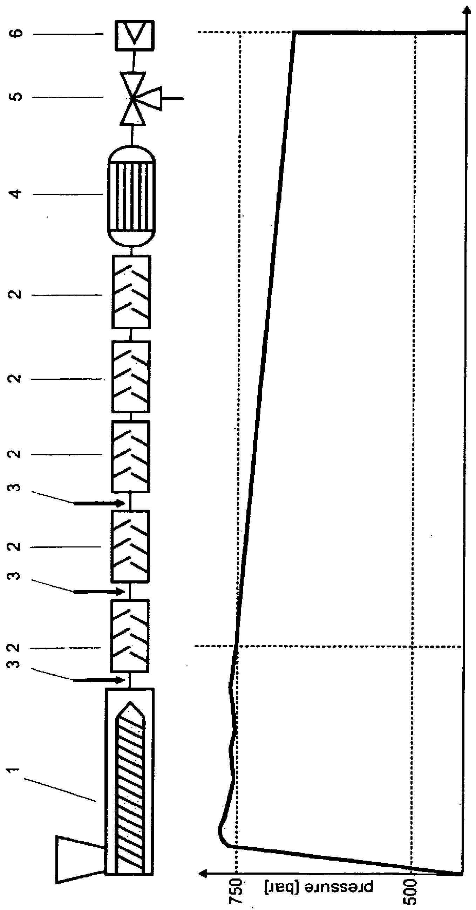

Für diese Beispiel wurde eine Apparatur gemäß Figur 1 eingesetzt. PMMA 6N wird mit einem Nutbuchsenextruder vom Typ HELIBAR® HB035-36D plastifiziert. Der Zylinder war durchgängig mit Wendelnuten versehen und die Bohrung des Zylinders hatte einen Durchmesser von 35 mm. Der Extruder war 36 Durchmesser lang und konnte mit einem Durchsatz von 70 kg/h PMMA einen Massedruck von 75 MPa an der Schneckenspitze aufbauen. Der Massedruck wurde hierbei mit Membransensoren gemessen.

Die plastifizierte PMMA-Formmasse wurde anschließend in eine Misch- und Kühlstrecke gefördert. Diese bestand aus statischen Mischern (2) und war 50 Durchmesser lang. An die statischen Mischer schloss sich ein 2,20 m langer Rohrbündel-Wärmetauscher (4) an.

Das Treibmittel Kohlendioxid wurde mit einer Temperatur von 20°C und einem Injektionsdruck von 78 MPa in die statische Mischerstrecke über Dosierstellen (3) dosiert. Die erste Dosierstelle befand sich am Beginn der Misch- und Kühlstrecke, die zweite Dosierstelle folgte nach einer Länge von 20 Durchmessern. Über die erste Dosierstelle wurde CO₂ mit einem Durchsatz von 25 kg/h in eine 240°C warme polymere Formmasse dosiert, in die zweite Dosierstelle CO₂ mit einem Durchsatz von 15 kg/h. Die beladene Formmasse wurde entlang der Misch- und Kühlstrecke auf 100°C abgekühlt. Der Druckverbrauch entlang der Misch- und Kühlstrecke betrug 10 MPa. Entlang der Misch- und Kühlstrecke wurde das Kohlendioxid vollständig im Polymer gelöst. Die so beladene Formmasse wurde im Anschluss über eine Lochplatte (6) zu aufgeschäumten Strängen extrudiert. Der Druck vor der Lochplatte betrug 65 MPa.

Die erhaltenen Schaumstränge mit einem Durchmesser von 1 mm wurden anschließend in einen Schneidkanal geführt, in dem sie mit einem Zerreissventilator auf eine Länge von 10 mm gekürzt wurden. Sie wiesen eine nanoporöse Zellstruktur mit einem mittleren Zelldurchmesser kleiner 150 nm auf.

## Patentansprüche

1. Verfahren zur kontinuierlichen Herstellung von nanoporösen Polymerschaumstoffen, umfassend die Stufen
a) Bilden einer Polymerschmelze aus thermoplastischem Polymer und Druckaufbau in einem Einschneckenextruder mit genutetem Zylinder oder in einem Zweischneckenextruder mit nachgeschalteter Zahnradpumpe auf einen Druck im Bereich von 20 bis 200 MPa,
b) Beladen der Polymerschmelze mit einem Treibmittel in einer dem Druckaufbau anschließenden Zone mit Mischelementen unter einem Druck und bei einer Temperatur, bei dem sich das Treibmittel im überkritischen Zustand befindet,
c) Temperieren der beladenen Polymerschmelze über Kühlelemente auf eine Temperatur, welche im Bereich von 40 °C unter bis 40°C über der mittels DSC nach DIN-ISO 11357-2 bei einer Aufheizrate von 20 K/min ermittelbaren Glasübergangstemperatur der unbeladenen Polymerschmelze liegt,
d) Druckentspannung der in Stufe b) beladenen und in Stufe c) temperierten Polymerschmelze über eine Düse oder Düsenplatte mit einer Druckentspannungsrate im Bereich von 15.000 bis 2.000.000 MPa/sec.

2. Verfahren nach Anspruch 1, **dadurch gekennzeichnet, dass** die Beladung der Polymerschmelze kontinuierlich über mindestens zwei Dosierstellen, welche an unterschiedlichen Stellen der in Stufen b) und c) verwendeten Misch- oder Kühlelemente angebracht sind, durchgeführt wird.

3. Verfahren nach Anspruch 1 oder 2, **dadurch gekennzeichnet, dass** Polystyrol, Polymethylmethacrylat (PMMA), Polycarbonat, Styrol-Acrylnitril-Copolymere, Polysulfone, Polyethersulfon, Polyetherimid oder Mischungen davon als thermoplastisches Polymer eingesetzt wird.

4. Verfahren nach einem der Ansprüche 1 bis 3, **dadurch gekennzeichnet, dass** die beladene Polymerschmelze in Stufe c) auf eine Temperatur im Bereich von 50 bis 250°C temperiert wird.

5. Verfahren nach einem der Ansprüche 1 bis 4, **dadurch gekennzeichnet, dass** der Druck nach der. Druckentspannung im Bereich von 0,01 bis 1 MPa (absolut) liegt.

6. Verfahren nach einem der Ansprüche 1 bis 5, **dadurch gekennzeichnet, dass** als Gas Kohlendioxid (CO₂) oder Distickstoffoxid (N₂O) eingesetzt wird.

7. Verfahren nach einem der Ansprüche 1 bis 6, **dadurch gekennzeichnet, dass** die Polymerschmelze mit 45 bis 95 Gew.-% Treibmittel, bezogen auf beladene Polymerschmelze, beladen wird.

8. Verfahren nach einem der Ansprüche 1 bis 7, **dadurch gekennzeichnet, dass** die Summe der Verhältnisse Länge zu Durchmesser (L/D-Verhältnis) aller der in Stufen b) und c) verwendeten Misch- und Kühfelemente im Bereich von 20 bis 100 liegt.

9. Verfahren nach einem der Ansprüche 1 bis 8, **dadurch gekennzeichnet, dass** es zusätzlich eine Stufe
e) Zerkleinern des in Stufe d) erhaltenen nanoporösen Polymerschaumstoffes zu Schaumstoffpartikeln mit einem mittleren Partikeldurchmesser im Bereich von 10 µm bis 50 mm, umfasst.

## Claims

1. A process for the continuous production of a nanoporous polymer foam, comprising the stages of
a) forming a polymer melt from thermoplastic polymer and pressure build-up in a single-screw extruder with grooved cylinder or in a twinscrew extruder with downstream gear pump to a pressure in the range from 20 to 200 MPa,
b) loading the polymer melt with a blowing agent in a zone following on from the pressure buildup and having mixing elements under a pressure and at a temperature at which the blowing agent is in the supercritical state,
c) temperature-controlling the laden polymer melt via cooling elements to a temperature which lies in the range from 40°C under to 40°C over the glass transition temperature of the unladen polymer melt determinable by DSC according to DIN-ISO 11357-2 at a heating rate of 20 K/min,
d) depressurizing the polymer melt laden in stage b) and temperature controlled in stage c) via a die or die plate at a depressurization rate in the range from 15,000 to 2,000,000 MPa/sec.

2. The process according to claim 1, wherein the loading of the polymer melt is performed continuously via at least two dosing points disposed at different locations of the mixing or cooling elements used in stages b) and c).

3. The process according to claim 1 or 2, wherein polystyrene, polymethyl methacrylate (PMMA), polycarbonate, styrene-acrylonitrile copolymers, polysulfones, polyether sulfone, polyether imide or mixtures thereof are used as the thermoplastic polymer.

4. The process according to one of claims 1 to 3, wherein the laden polymer melt is heated in stage c) to a temperature in the range from 50 to 250°C.

5. The process according to one of claims 1 to 4, wherein the pressure lies in the range from 0.01 to 1 mPa (absolute) after the depressurization.

6. The process according to one of claims 1 to 5, wherein carbon dioxide (CO₂) or dinitrogen oxide (N₂O) is used as the gas.

7. The process according to one of claims 1 to 6, wherein the polymer melt is loaded with from 45 to 95 wt.% of blowing agent, based on laden polymer melt.

8. The process according to one of claims 1 to 7, wherein the length to diameter ratios (L/D ratio) of all mixing and cooling elements used in stages b) and c) sum to a total in the range from 20 to 100.

9. The process according to one of claims 1 to 8, wherein it additionally comprises a stage of
e) comminuting the nanoporous polymer foam obtained in stage d) to foam particles having an average particle diameter in the range from 10 µm to 50 mm.

## Revendications

1. Procédé de fabrication continue de mousses polymères nanoporeuses, comprenant les étapes suivantes :
a) la formation d'une masse fondue polymère à partir d'un polymère thermoplastique et la mise sous pression dans une extrudeuse monovis à cylindre rainuré ou dans une extrudeuse bivis munie d'une pompe à engrenage en aval à une pression dans la plage allant de 20 à 200 MPa,
b) le chargement de la masse fondue polymère avec un agent gonflant dans une zone subséquente à la mise sous pression comprenant des éléments de mélange sous une pression et à une température auxquelles l'agent gonflant se trouve à un état supercritique,
c) le conditionnement de la masse fondue polymère chargée par des éléments de refroidissement à une température qui se situe dans la plage allant de 40 °C en dessous à 40 °C au-dessus de la température de transition vitreuse de la masse fondue polymère non chargée déterminable par DSC selon DIN-ISO 11357-2 à un taux de chauffe de 20 K/min,
d) la détente de la masse fondue polymère chargée à l'étape b) et conditionnée à l'étape c) par une buse ou une plaque de buses à un taux de détente dans la plage allant de 15 000 à 2 000 000 MPa/s.

2. Procédé selon la revendication 1, **caractérisé en ce que** le chargement de la masse fondue polymère est réalisé en continu par au moins deux emplacements d'alimentation, qui sont disposés à des emplacements différents des éléments de mélange ou de refroidissement utilisés aux étapes b) et c).

3. Procédé selon la revendication 1 ou 2, **caractérisé en ce que** du polystyrène, du polyméthacrylate de méthyle (PMMA), du polycarbonate, des copolymères de styrène-acrylonitrile, des polysulfones, de la polyéthersulfone, du polyéther-imide ou leurs mélanges sont utilisés en tant que polymère thermoplastique.

4. Procédé selon l'une quelconque des revendications 1 à 3, **caractérisé en ce que** la masse polymère chargée est conditionnée à l'étape c) à une température dans la plage allant de 50 à 250 °C.

5. Procédé selon l'une quelconque des revendications 1 à 4, **caractérisé en ce que** la pression après la détente se situe dans la plage allant de 0,01 à 1 MPa (absolue).

6. Procédé selon l'une quelconque des revendications 1 à 5, **caractérisé en ce que** du dioxyde de carbone (CO₂) ou de l'oxyde de diazote (N₂O) est utilisé en tant que gaz.

7. Procédé selon l'une quelconque des revendications 1 à 6, **caractérisé en ce que** la masse fondue polymère est chargée avec 45 à 95 % en poids d'agent gonflant, par rapport à la masse polymère chargée.

8. Procédé selon l'une quelconque des revendications 1 à 7, **caractérisé en ce que** la somme des rapports longueur sur diamètre (rapport L/D) de tous les éléments de mélange et de refroidissement utilisés aux étapes b) et c) se situe dans la plage allant de 20 à 100.

9. Procédé selon l'une quelconque des revendications 1 à 8, **caractérisé en ce qu'**il comprend en outre une étape :
e) le broyage de la mousse polymère nanoporeuse obtenue à l'étape d) en particules de mousse ayant un diamètre de particule moyen dans la plage allant de 10 µm à 50 mm.
